# EUROPEAN PATENT APPLICATION

(11) **EP 1 074 308 A1**
(43) Date of publication of application: **07.02.2001**
(21) Application number: 99914760.6
(22) Date of filing: 15.04.1999
(51) Int. Cl.: B05D 1/04, B05D 7/24

(54) **METHOD OF REGULATING COATING AND METHOD OF FINISH COATING**

(30) Priority: 16.04.1998 JP 10627098; 29.06.1998 JP 18206998
(71) Applicant: KANEKA CORPORATION, Osaka-shi, Osaka 530-8288 (JP)
(72) Inventor: NAKAMURA, Seigo, Takasago-shi Hyogo 676-0026 (JP); ANDO, Naotami, Kako-gun Hyogo 675-0151 (JP); INOUE, Masaharu, Kobe-shi Hyogo 657-0033 (JP); KOHNO, Yoshiyuki, Akashi-shi Hyogo 673-0018 (JP); NAMBU, Toshiro, Tarumi-ku Kobe-shi Hyogo 655-0853 (JP)
(74) Representative: Gille Hrabal Struck Neidlein Prop Roos
(86) International application number: JP9902015
(87) International publication number: WO9954059

(57) **Abstract**

A method of regulating a finish coating material by which the coating material rising in a circulation tank in the electrostatic finish coating can be inhibited from suffering a viscosity increase, have suitability for the electrostatic coating, and give a cured film retaining desirable properties especially stain resistance,
wherein in the step of electrostatically applying the finish coating material obtained by mixing a heat-curable coating composition containing a heat-curable organic resin by containing 1 to 70 parts by weight (on the solid basis), per 100 parts by weight (on the solid basis) of said heat-curable organic resin, of a partial hydrolyzate condensate of an organosilicate compound of the general formula (1):

(R¹O)₄₋ₐ-Si-(R²)ₐ (1)

an aromatic hydrocarbon, an alcohol, and dehydrant are introduced into the circulation tank through which the finish coating material is circulated, in order to regulate the viscosity and water content of the coating material.

## Description

### TECHNICAL FIELD

The present invention relates to a method of coating adjustment in the electrostatic coating with a top coating. More particularly, it relates to a method of coating adjustment by which the viscosity of the top coating can be prevented from rising in the circulation tank in the course of electrostatic application of the top coating and by which the electrostatic coatability of the coating and cured coating film characteristics, particularly stain resistance, can be prevented from deteriorating.

The present invention further relates to a finish coating method which comprises applying a base coating and a heat-curable top coating (hereinafter referred to sometimes as a top-coat clear coating) serially, curing the resulting coats thermally, further applying a base coating and a top-coat clear coating serially (recoating) and finally curing the resulting coats thermally. More particularly, the invention relates to a finish-coating method wherein, in said recoating, a base coating containing a silane coupling agent is used to thereby form a base coat showing an exceptionally high adhesion to a thermally cured top-coat clear coating containing a partial hydrolyzate condensate of an organosilicate compound.

### BACKGROUND ART

In recent years, in connection with the electrostatic application of top coatings, studied have been made on heat-curable coating compositions having silicone crosslinks, carboxyl-epoxy crosslinks or other crosslinks introduced therein for obtaining coating films excellent in performance characteristics, in particular acid resistance and scratch resistance.

Furthermore, top coatings derived from heat-curable coating compositions by incorporating a partial hydrolyzate condensate of an organosilicate compound for providing cured coatings with the function of stain resistance have already been proposed and the demand for such compositions is expected to increase in the future.

Meanwhile, in the coating step of electrostatically applying a top coating, a circulation system is employed in many cases, namely the top coating is received in a circulation tank, then sent therefrom to an electrostatic coater and partly sent back through a pipe or the like to the circulation tank. Since the coating in this circulation tank is always under agitation and the volatile components such as an organic solvent evaporate, the organic solvent is supplemented for maintaining the viscosity of the coating at a constant level.

However, in cases where the heat-curable coating composition contains a partial hydrolyzate condensate of an organosilicate compound and silicone crosslinking is made use of, in particular, mere supplementation of the organic solvent alone allows the viscosity of the coating to rise due to the moisture contained in the coating and the moisture getting into the coating from the atmosphere. If the amount of the solvent is increased to reduce the viscosity to a level adequate for application, the solid matter content of the coating composition becomes too low, worsening the finish appearance and thus raising a problem. Furthermore, the hydrolysis and condensation reactions of an organosilicate compound progress owing to the moisture in the coating, causing such problems as gel formation in the coating and/or failure in showing stain resistance in the cured coating films.

The so-called two-coat one-bake technique for finishing the coating process is known in the art which comprises applying a base coating, then applying a top-coat clear coating and subjecting both coatings to simultaneous thermal curing. If the coatings obtained by this coating/finishing technique show cissing, foreign matter sticking and/or other defects, repairs are generally made by the two-coat one bake technique comprising applying a base coating and a top-coat clear coating again (recoating), followed by thermal curing.

Recently, as mentioned above, crosslinks, such as silicone crosslinks and crosslinks derived from an acid (e.g. carboxyl group) and an epoxy group, have been introduced into top-coat clear coatings for the purpose of obtaining coatings excellent in weathering resistance, scratch resistance and acid resistance. Furthermore, it has been proposed that a partial hydrolyzate condensate of an organosilicate compound be incorporated in top-coat clear coatings to thereby provide cured coatings with stain resistance.

However, when recoating is made on a coat resulting from curing of a stain resistance-providing top-coat clear coating, a problem is encountered, namely poor adhesion results between the substrate top-coat clear coating film and the base coating film for recoating.

### SUMMARY OF THE INVENTION

Accordingly, it is an object of the present invention to provide a method of coating adjustment by which the top coating viscosity can be prevented from rising in the circulation tank in the process of electrostatic application of top coatings and by which the electrostatic coatability and cured coating film characteristics, in particular stain resistance, can be maintained.

In view of the foregoing, it is another object of the present invention to provide a method of finish-coating by which a finish coat showing very good adhesion can be obtained on recoating of the coat resulting from applying and thermal curing of a top-coat clear coating containing a partial hydrolyzate condensate of an organosilicate compound.

In accordance with a first aspect thereof, the present invention provides a method of coating adjustment in the electrostatic coating step of applying a top coating derived from a heat-curable coating composition containing a thermosetting organic resin by containing therein 1 to 70 parts by weight (on the solid basis), per 100 parts by weight (on the solid basis) of the heat-curable organic resin, of a partial hydrolyzate condensate of an organosilicate compound represented by the general formula (1):

(R¹O)₄₋ₐ-Si-(R²)ₐ (1)

wherein R¹ represents a hydrogen atom or a monovalent hydrocarbon group selected from among an alkyl group containing 1 to 10 carbon atoms, an aryl group containing 6 to 10 carbon atoms and an aralkyl group containing 7 to 11 carbon atoms, R² represents a monovalent hydrocarbon group selected from among an alkyl group containing 1 to 10 carbon atoms, an aryl group containing 6 to 10 carbon atoms and an aralkyl group containing 7 to 11 carbon atoms, and a represents 0 or 1,
which comprises injecting an aromatic hydrocarbon, an alcohol and a dehydrating agent into the circulation tank where the above top coating is circulated for the purpose of adjusting the viscosity and water content of the above top coating.

In accordance with a second aspect thereof, the present invention provides a method of finish-coating
which comprises applying, to a substrate, a heat-curable base coating [I] containing a metallic powder and/or a color pigment,
applying thereon a heat-curable top coating [i] containing 1 to 70 parts by weight (on the solid basis), per 100 parts by weight (on the solid basis) of the heat curable coating composition (A), of a partial hydrolyzate condensate (B) of an organosilicate compound represented by the general formula (1):

   (R¹O)₄₋ₐ-Si-(R²)ₐ (1)

   wherein R¹ represents a hydrogen atom or a monovalent hydrocarbon group selected from among an alkyl group containing 1 to 10 carbon atoms, an aryl group containing 3 to 10 carbon atoms and an aralkyl group containing 5 to 10 carbon atoms, R² represents a monovalent hydrocarbon group selected from among an alkyl group containing 1 to 10 carbon atoms, an aryl group containing 3 to 10 carbon atoms and an aralkyl group containing 5 to 10 carbon atoms, and a represents 0 or 1, followed by subjecting both coating films to simultaneous thermal curing,
further applying a heat-curable base coating [II] containing 0.01 to 30 parts by weight, per 100 parts by weight of the resin solids, of a silane coupling agent,
applying thereon a heat curable top coating [i],
and then subjecting both coating films to simultaneous thermal curing.

### DETAILED DESCRIPTION OF THE INVENTION

According to the first aspect, the present invention is related to a method of coating adjustment in the electrostatic coating step of applying a top coating derived from a heat-curable coating composition containing a thermosetting organic resin by containing therein 1 to 70 parts by weight (on the solid basis), per 100 parts by weight (on the solid basis) of the thermosetting organic resin, of a partial hydrolyzate condensate of an organosilicate compound represented by the general formula (1):

(R¹O)₄₋ₐ-Si-(R²)ₐ (1)

wherein R¹ represents a hydrogen atom or a monovalent hydrocarbon group selected from among an alkyl group containing 1 to 10 carbon atoms, an aryl group containing 6 to 10 carbon atoms and an aralkyl group containing 7 to 11 carbon atoms, R² represents a monovalent hydrocarbon group selected from among an alkyl group containing 1 to 10 carbon atoms, an aryl group containing 6 to 10 carbon atoms and an aralkyl group containing 7 to 11 carbon atoms, and a represents 0 or 1,
which comprises injecting an aromatic hydrocarbon, an alcohol and a dehydrating agent into the circulation tank where the above top coating is circulated for the purpose of adjusting the viscosity and water content of the above top coating.

In the following, this aspect of the invention is described in detail.

In the first aspect of the invention, the top coating can form a coating film upon application to the base coating film and is prepared by incorporating, in a heat-curable coating composition containing a heat-curable organic resin, 1 to 70 parts by weight (on the solid basis) of a partial hydrolyzate condensate of an organosilicate compound represented by the above formula (1) per 100 parts by weight (on the solid basis) of the above heat-curable organic resin.

The above heat-curable coating composition is not particularly restricted but includes, among others, those prepared by dissolving or dispersing, in an organic solvent, a composition comprising a heat-curable organic resin, a color pigment, an extender pigment, a leveling agent, an ultraviolet absorber, a light absorber and, if necessary, a dehydrating agent, a crosslinking agent and so on. Any of various curing catalysts can be incorporated in the above heat-curable coating composition for increasing the rate of curing of the heat-curable organic resin.

The above heat-curable organic resin is not particularly restricted but includes, among others, alkyd resins, polyester resins, acrylic resins, cellulosic resins and the like. As the crosslinking agent to be combined with these resins, there may be mentioned, for example, amino resins, isocyanate compounds and blocked isocyanate compounds, among others. These basal resins and crosslinking agents are known in the art. Mention may further be made of heat-curable modified silicone resins, heat-curable fluororesins, acrylic resins capable of forming crosslinks by means of an acid group and an epoxy group.

These may be used singly or two or more of them may be used combinedly.

The above heat-curable organic resin preferably has a number average molecular weight of 1,000 to 500,000. When the number average molecular weight is less than 1,000, the weathering resistance and other properties of the cured coating film tend to become worse. When it is in excess of 500,000, the appearance of the cured coating film tend to deteriorate. More preferred is 2,500 to 80,000.

The above heat-curable coating composition is described in detail in the following.

A heat-curable amino resin-based coating composition can be used as the above heat-curable coating composition.

The heat-curable amino resin-based coating composition includes compositions comprising a hydroxy-containing acrylic resin and an amino resin. Such compositions can give top coatings excellent in heat curability and cured film appearance.

The above hydroxy-containing acrylic resin is not particularly restricted but may be, for example, a resin obtainable by copolymerization of a hydroxy-containing vinyl monomer and another copolymerizable vinyl monomer.

The hydroxy-containing acrylic resin may comprise a single species or a combination of two or more species.

The above hydroxy-containing vinyl monomer is not particularly restricted but includes, among others, 2-hydroxyethyl (meth)acrylate, 2-hydroxypropyl (meth)acrylate, 2-hydroxybutyl (meth)acrylate, 4-hydroxybutyl (meth)acrylate, 2-hydroxyethyl vinyl ether, N-methylol(meth)acrylamide, 4-hydroxystyrene, Aronix 5700 (trademark; product of Toagosei Chemical Industry), hydroxy-terminated acrylic ester oligomers such as HE-10, HE-20, HP-10 and HP-20 (trademarks; products of Nippon Shokubai Kagaku Kogyo); Blemmer PP series monomers (polypropylene glycol methacryalte; product of Nippon oil and fat), Blemmer PE series monomers (polyethylene glycol monomethacryalte), Blemmer PEP series monomers (polyethylene glycol-polypropylene glycol methacryalte), Blemmer AP-400 (polypropylene glycol monoacrylate), Blemmer AE-350 (polyethylene glycol monoacrylate) and Blemmer GLM (glycerol monomethacrylate) (all trademarks); ε-caprolactone-modified hydroxyalkyl vinyl compounds which are obtainable by reacting a hydroxy-containing vinyl compound with ε-caprolactone and are copolymerizable; and polycarbonate-containing vinyl compounds such as HEAC-1 (trademark; product of Daicel Chemical Industries).

These may be used singly or two or more of them may be used combinedly.

Preferred among those mentioned above are 2-hydroxyethyl (meth)acrylate, 2-hydroxypropyl (meth)acrylate, 2-hydroxybutyl (meth)acrylate and 4-hydroxybutyl (meth)acrylate, since these can provide cured coatings with good acid resistance and water resistance.

The another vinyl monomer copolymerizable with the above hydroxy-containing vinyl monomer is not particularly restricted but includes, among others, (meth)acrylic ester monomers such as methyl (meth)acrylate, ethyl (meth)acrylate, butyl (meth)acrylate, isobutyl (meth)acrylate, tert-butyl (meth)acrylate, cyclohexyl (meth)acrylate, 3,3,5-trimethylcyclohexyl (meth)acrylate, 2-ethylhexyl (meth)acrylate, isobornyl (meth)acrylate, stearyl (meth)acrylate, benzyl (meth)acrylate, cyclohexyl (meth)acrylate, trifluoroethyl (meth)acrylate, pentafluoropropyl (meth)acrylate and perfluorocyclohexyl (meth)acrylate; unsaturated polycarboxylic acid esters such as diesters or half esters of an unsaturated polycarboxylic acid (maleic acid, fumaric acid, itaconic acid) and a straight or branched alcohol containing 1 to 20 carbon atoms; vinyl-containing aromatic hydrocarbons such as styrene, α-methylstyrene, chlorostyrene, styrenesulfonic acid, vinyltoluene and sodium styrenesulfonate; unsaturated carboxylic acids such as (meth)acrylic acid, maleic acid and fumaric acid, and salts thereof such as alkali metal salts, ammonium salts and amine salts; unsaturated carboxylic acid anhydrides such as maleic anhydride, unsaturated carboxylic acid esters such as diesters or half esters derived from such acid anhydrides by reaction with a straight or branched alcohol containing 1 to 20 carbon atoms; vinyl esters or allyl compounds such as vinyl acetate, vinyl propionate and diallyl phthalate; cyano (nitrile group)-containing vinyl compounds such as (meth)acrylonitrile; epoxy-containing vinyl compounds such as glycidyl (meth)acrylate; basic nitrogen atom-containing vinyl compounds such as dimethylaminoethyl (meth)acrylate, dimethylaminoethyl (meth)acrylate, diethylaminoethyl (meth)acrylate, vinylpyridine and aminoethyl vinyl ether; amido-containing vinyl compounds such as (meth)acrylamide, itaconic diamide, α-ethyl(meth)acrylamide, crotonamide, maleic diamide, fumaric diamide, N-vinylpyrrolidone, N-butoxymethyl(meth)acrylamide, N,N-dimethylacrylamide, N-methylacrylamide and acryloylmorpholine; such acrylic resins as curable alkyl (meth)acrylate polymers copolymerized with a light stabilizer monomer (e.g. 1,2,2,6,6-pentamethyl-4-piperidyl (meth)acrylate, 2,2,6,6-tetramethyl-4-piperidyl (meth)acrylate); ultraviolet absorber monomers such as 2-hydroxy-4-((meth)acryloyloxyethoxy)benzophenone; and other vinyl compounds such as methyl vinyl ether, cyclohexyl vinyl ether, vinyl chloride, vinylidene chloride, chloroprene, propylene, butadiene, isoprene, fluoroolefins, maleimide, N-vinylimidazole and vinylsulfonic acid.

These may be used singly or two or more of them may be used combinedly.

The method of copolymerization for preparing the above hydroxy-containing acrylic resin may be any one known in the art. The technique of solution polymerization using a radical initiator is preferred, however. In the solution polymerization, a chain transfer agent, such as n-dodecylmercaptan, is used, when necessary, for controlling the molecular weight.

The solvent to be used in the above solution polymerization is not particularly restricted but may be, for example, a nonreactive solvent.

In preparing the above hydroxy-containing acrylic resin, it is preferred that 10 to 80% by weight of the hydroxy-containing vinyl monomer and 20 to 90% by weight of the other copolymerizable vinyl monomer be copolymerized. When the amount of the hydroxy-containing vinyl monomer is less than 10% by weight, the heat-curability of the coating tends to decrease. When it is in excess of 80% by weight, the water resistance and weathering resistance of the cured coating films tend to decrease. More preferably, 20 to 60% by weight of the above hydroxy-containing vinyl monomer is copolymerized with 40 to 80% by weight of the other copolymerizable vinyl monomer.

In cases that the hydroxy-containing acrylic resin contains n-butyl methacrylate units as a comonomer component, the resin shows improved compatibility with the above-mentioned partial hydrolyzate condensate of organosilicate compound. The content of n-butyl methacrylate units is preferably 10 to 60% by weight, more preferably 15 to 50% by weight.

The above hydroxy-containing acrylic resin may contain, in the main chain thereof, less than 50% by weight of a segment formed by urethane bonding or siloxane bonding.

The hydroxy-containing acrylic resin preferably has a number average molecular weight of 1,000 to 25,000. When the number average molecular weight is less than 1,000, the weathering resistance or water resistance may decrease in certain cases and, when it exceeds 25,000, the compatibility of the composition may decrease in some instances. More preferred is 1,000 to 15,000. The hydroxyl value is preferably 20 to 1,000. When the hydroxyl value is less than 20, the durability or stain resistance of the cured coating film may become worse in some cases and, when it is in excess of 1,000, the durability or water resistance of the cured coating film may deteriorate in certain instances. More preferred is 50 to 750.

The amino resin mentioned above is not particularly restricted but includes, among others, hydroxymethylated amino resins obtainable by reaction of an amino component, such as melamine, urea, benzoguanamine, acetoguanamine, stearoguanamine, spiroguanamine or dicyandiamide, and an aldehyde.

These may be used singly or two or more of them may be used combinedly.

The above aldehyde is not particularly restricted but includes, among others, formaldehyde, paraformaldehyde, acetaldehyde, benzaldehyde and the like.

These may be used singly or two or more of them may be used combinedly.

Products of etherification of the above hydroxymethylated amino resins with an appropriate alcohol may also be used.

The alcohol to be used for the above etherification is not particularly restricted but includes, among others, methyl alcohol, ethyl alcohol, n-propyl alcohol, isopropyl alcohol, n-butyl alcohol, isobutyl alcohol, 2-ethylbutanol, 2-ethylhexanol and the like.

These may be used singly or two or more of them may be used combinedly.

The mixing ratio between the above hydroxy-containing acrylic resin and the above amino resin is preferably such that the hydroxy-containing acrylic resin amounts to 90 to 40% by weight and the amino resin to 10 to 60% by weight. Outside this range, the stain resistance, water resistance or weathering resistance of the cured coating film decreases. A more preferred range is such that the hydroxy-containing acrylic resin amounts to 80 to 50% by weight and the amino resin to 20 to 50% by weight.

Also preferred as the above heat-curable coating composition are compositions each containing a hydroxy-containing acrylic resin and a polyisocyanate compound and/or a blocked polyisocyanate compound. These compositions form urethane crosslinks in the process of coating film formation and give coats excellent in durability.

As the hydroxy-containing acrylic resin, there may be mentioned the same species as those mentioned hereinabove.

The polyisocyanate compound is not particularly restricted but may be any one having two or more isocyanato groups per molecule. Thus, there may be mentioned, for example, aliphatic polyisocyanates such as hexamethylene diisocyanate and trimethylhexamethylene diisocyanate, alicyclic polyisocyanates such as hydrogenated xylylene diisocyanate, isophorone diisocyanate and cyclohexane diisocyanate, and aromatic polyisocyanates such as tolylene diisocyanate and diphenylmethane diisocyanate.

These may be used singly or two or more of them may be used in combination.

The blocked polyisocyanate is not particularly restricted but includes, for example, products derived from the polyisocyanate compounds mentioned above by blocking with a lactam type blocking agent such as ε-caprolactam; an alcohol type blocking agent such as ethanol, propanol or butanol; or an oxime type blocking agent such as acetoxime.

These may be used singly or two or more of them may be used in combination.

The mixing ratio between the above hydroxy-containing acrylic resin and the above polyisocyanate and/or blocked polyisocyanate is preferably such that the isocyanate groups of the polyisocyanate and/or blocked polyisocyanate compound amount to 0.5 to 1.5 equivalents relative to the hydroxy groups of the hydroxy-containing acrylic resin. When the mixing ratio is less than 0.5 equivalent, the stain resistance, weathering resistance and water resistance, among others, of the cured coating film decrease and, when it exceeds 1.5 equivalents, the stain resistance, weathering resistance and the like of the cured coating film, tend to decrease. More preferred is 0.8 to 1.2 equivalents.

Further, the above heat-curable coating composition are compositions preferably contains an acrylic resin forming crosslinks by means of a carboxyl group and an epoxy group. Such compositions form acid-epoxy crosslinks in the process of coating film formation and give the coating films excellent in acid resistance and weathering resistance.

As the above acrylic resin forming crosslinks by means of a carboxyl group and an epoxy group, there may be mentioned, for example, acrylic resins composed of an epoxy-containing resin and a carboxyl-containing resin or compound.

The above epoxy-containing resin is not particularly restricted but includes, among others, such commercial epoxy resins as Celloxide 2021 (trademark; product of Daicel Chemical Industries), Epolead GT-400 (trademark; product of Daicel Chemical Industries) and Epolite 100MF (trademark; product of Kyoeisha Yushi), and epoxy-containing acrylic resins. Among them, epoxy-containing acrylic resins are preferred.

These may be used singly or two or more of them may be used combinedly.

The epoxy-containing acrylic resins can easily be obtained by copolymerizing an epoxy-containing vinyl monomer with another copolymerizable vinyl monomer by a method known in the art. A hydroxy-containing acrylic monomer may also be subjected to such copolymerization.

The above epoxy-containing acrylic resin may comprise a single species or a combination of two or more species.

As the above-mentioned another copolymerizable vinyl monomer and the above hydroxy-containing acrylic monomer, there may be mentioned the same species as respectively mentioned hereinabove.

The above epoxy-containing vinyl monomer is not particularly restricted but includes, among others, glycidyl methacrylate, methylglycidyl methacrylate and 3,4-epoxycyclohexylmethyl methacrylate. These are preferred, since they provide coatings with heat curability and cured coating films with good water resistance.

These may be used singly or two or more of them may be used combinedly.

The above epoxy-containing acrylic resin preferably has an epoxy equivalent of 100 to 1,000. When the epoxy equivalent is less than 100, the cured coating films tend to become excessively hard, hence brittle. When it exceeds 1,000, the heat-curability of the coating tends to become insufficient. More preferred is 200 to 800.

The epoxy-containing resin preferably has a number average molecular weight of 2,000 to 20,000. When the number average molecular weight is less than 2,000, the weathering resistance of the cured coating film and the heat-curability of the coating tend to decrease. When it exceeds 20,000, the appearance of the cured coating film tends to become worse. More preferred is 2,500 to 15,000.

The above carboxyl-containing resin or compound is not particularly restricted but includes, among others, polycarboxylic acid compounds obtained by reacting a polyol compound with an acid anhydride; carboxyl-containing resins obtained by copolymerizing a carboxyl-containing vinyl monomer with some other copolymerizable vinyl monomer; and carboxyl-containing resins obtained by half esterification of an acid anhydride moiety-containing resin obtained by copolymerization of an acid anhydride moiety-containing vinyl monomer and another copolymerizable vinyl monomer with a lower alcohol, such as methanol, allyl alcohol or ethanol.

These may be used singly or two or more of them may be used combinedly.

The above carboxyl-containing resin may further comprise a hydroxy-containing vinyl monomer as a comonomer.

As the other copolymerizable vinyl monomer and the above hydroxy-containing vinyl monomer, there may be mentioned the same species as respectively mentioned hereinabove.

The above carboxyl-containing vinyl monomer is not particularly restricted, but includes acrylic acid, methacrylic acid, and the like.

These may be used singly or two or more of them may be used combinedly.

The above-mentioned acid anhydride moiety-containing vinyl monomer is not particularly restricted, but includes maleic anhydride, itaconic anhydride and the like.

These may be used singly or two or more of them may be used combinedly.

The carboxyl-containing resin is preferably prepared by copolymerizing 7 to 40% by weight of the carboxyl-containing vinyl monomer or acid anhydride moiety-containing vinyl monomer with 60 to 93% by weight of the other copolymerizable vinyl monomer. When the amount of the carboxyl- or acid anhydride moiety-containing vinyl monomer is less than 7% by weight, the heat-curability of the coating film tends to be insufficient. When it exceeds 40% by weight, the coating films become excessively hard and brittle, hence the weathering resistance tends to decrease. It is more preferred that the carboxyl-containing vinyl monomer or acid anhydride moiety-containing vinyl monomer amounts to 10 to 30% by weight and the other copolymerizable vinyl monomer to 70 to 90% by weight.

The above carboxyl-containing resin preferably has a number average molecular weight of 1,500 to 20,000. When the number average molecular weight is less than 1,500, the durability of the cured coating film tends to decrease. When it exceeds 20,000, the appearance of the cured coating film and the workability in the step of coating film tend to decrease. More preferred is 3,000 to 15,000.

At least one of the above epoxy-containing resin and the carboxyl-containing resin or compound should be an acrylic resin.

The mixing ratio between the above epoxy-containing resin and the above carboxyl-containing resin or compound is preferred that the carboxyl groups in the carboxyl-containing resin or compound amount to 0.2 to 5 equivalents to each equivalent of the epoxy groups in the epoxy-containing resin. When the carboxyl content is less than 0.2 equivalent, the heat-curability of the coating tends to decrease. When it is more than 5 equivalents, the weathering resistance and water resistance of the cured coating film tend to decrease. More preferred is 0.3 to 3.0 equivalents.

Also preferred as the above-mentioned heat-curable coating composition are compositions each containing an acryl resin capable of forming silicone crosslinks. Such compositions form silicone crosslinks in the process of coating film formation and give coating films excellent in acid resistance and weathering resistance.

The acrylic resin capable of forming silicone crosslinks is not particularly restricted, but includes alkoxysilyl-containing resins, hydroxy- and alkoxysilyl-containing resins, epoxy- and alkoxysilyl-containing resins, and hydroxy-, epoxy- and alkoxysilyl-containing resins, among others.

These may be used singly or two or more of them may be used combinedly.

The above alkoxysilyl-containing resins are vinyl polymers whose main chain is substantially a vinyl polymer chain and which have, per molecule thereof, one or more alkoxysilyl groups at a main chain terminus, on a side chain, or both at a main chain terminus and on a side chain.

The above hydroxy- and alkoxysilyl-containing resins are vinyl polymers whose main chain is substantially a vinyl polymer chain and which have, per molecule thereof, one or more alkoxysilyl groups at a main chain terminus, on a side chain, or both at a main chain terminus and on a side chain and further have, per molecule thereof, one or more hydroxy groups at a main chain terminus, on a side chain, or both at a main chain terminus and on a side chain.

The above epoxy- and alkoxysilyl-containing resins are vinyl polymers whose main chain is substantially a vinyl polymer chain and which have, per molecule thereof, one or more alkoxysilyl groups at a main chain terminus, on a side chain, or both at a main chain terminus and on a side chain and further have, per molecule thereof, one or more epoxy groups at a main chain terminus, on a side chain, or both at a main chain terminus and on a side chain.

The above hydroxy-, epoxy- and alkoxysilyl-containing resins comprises vinyl polymers whose main chain is substantially a vinyl polymer chain and which have, per molecule thereof, one or more alkoxysilyl group, one or more hydroxy group and one or more epoxy group at a main chain terminus, on a side chain, or both at a main chain terminus and on a side chain.

The above acrylic resin capable of forming silicone crosslinks is not particularly restricted, but includes those readily obtainable, for example, by copolymerizing a combination of an alkoxysilyl-containing vinyl monomer and a hydroxy-containing vinyl monomer, epoxy-containing vinyl monomer or some other copolymerizable vinyl monomer by a method known in the art.

The alkoxysilyl-containing vinyl monomer is not particularly restricted, but includes vinyltrimethoxysilane, vinylmethyldimethoxysilane, vinyltriethoxysilane, vinylmethyldiethoxysilane, vinyltris(2-methoxyethoxy)silane, γ-(meth)acryloyloxypropyltrimethoxysilane, γ-(meth)acryloyloxypropylmethyldimethoxysilane, vinyltriacetoxysilane, β-(meth)acryloyloxyethyltrimethoxysilane, γ-(meth)acryloyloxypropyltriethoxysilane and γ-(meth)acryloyloxypropylmethyldiethoxysilane, for instance.

These may be used singly or two or more of them may be used combinedly.

As the above hydroxy-containing vinyl monomer, the above epoxy-containing vinyl monomer and the above other copolymerizable vinyl monomer, there may be mentioned the same species as respectively mentioned hereinabove.

The above acrylic resin capable of forming silicone crosslinks preferably has an alkoxysilyl equivalent of 400 to 10,000 g/mole since, in that case, the coating can have good heat curability and the cured coating film can have good acid resistance and weathering resistance, among others. When the alkoxysilyl equivalent is less than 400 g/mole, the internal stress increases and, when it is above 10,000 g/mole, the heat-curability of the coating tends to decrease. More preferred is 410 to 7,000 g/mole, and most preferred is 450 to 5,000 g/mole.

In cases that the acrylic resin capable of forming silicone crosslinks contains a hydroxy group, the resin preferably has a hydroxyl value of 400 to 5,000 g/mole. When the hydroxyl value is less than 400 g/mole, the weathering resistance of the cured coating film becomes low. At a value higher than 5,000 g/mole, the heat-curability of the coating and the scratch resistance and shock resistance of the cured coating film decrease. More preferred is 450 to 3,000 g/mole, and particularly more preferred is 500 to 2,000 g/mole.

In cases that the acrylic resin capable of forming silicone crosslinks contains an epoxy group, the resin preferably has an epoxy equivalent of 240 to 3,000 g/mole. When the epoxy equivalent is less than 240 g/mole, the compatibility with partial hydrolyzate condensates of an organosilicate compound is decreased. When it is more than 3,000 g/mole, the heat-curability of the coating and the scratch resistance and finish of the cured coating film tends to decrease. More preferred is 240 to 2,000 g/mole, and particularly more preferred is 300 to 1,500 g/mole.

The acrylic resin capable of forming silicone crosslinks preferably has a number average molecular weight of 2,000 to 20,000. When the number average molecular weight is less than 2,000, the heat-curability of the coating and the weathering resistance of the cured coating film tend to decrease. When it exceeds 20,000, the appearance of the cured coating film and the workability in the coating step tend to decrease. More preferred is 3,000 to 15,000.

In cases that the acrylic resin capable of forming silicone crosslinks is an epoxy- and alkoxysilyl-containing one or a hydroxy-, epoxy- and alkoxysilyl-containing one, the above-mentioned carboxyl-containing resin or compound is preferably used, since, then, the coating film very excellent in acid resistance and scratch resistance can be obtained.

Further, the above-mentioned heat-curable coating composition preferably contains an acrylic resin capable of forming at least two kinds of crosslinks, selected from the group consisting of silicone, carboxyl-epoxy, urethane, and melamine crosslinks. Such acrylic resin can form two or more kinds of crosslinks in the process of coating film formation, giving the coat excellent in acid resistance and weathering resistance.

The above-mentioned acrylic resin capable of forming at least two kinds of crosslinks, selected from the group consisting of silicone, carboxyl-epoxy, urethane, and melamine crosslinks, is not particularly restricted but includes, for example, an acrylic resin containing at least two functional groups selected from the group consisting of an alkoxysilyl group, an epoxy group, a carboxyl group and a hydroxy group.

The acrylic resin capable of forming at least tow kinds of crosslinks, selected from the group consisting of silicone, carboxyl-epoxy, urethane, and melamine crosslinks, may be used singly or two or more species may be used in combination.

The acrylic resin containing at least two functional groups selected from the group consisting of an alkoxysilyl group, an epoxy group, a carboxyl group and a hydroxy group comprises a vinyl polymer which has an acrylic polymer chain substantially as its main chain and at least two functional groups selected from the group consisting of an alkoxysilyl group, an epoxy group, a carboxyl group and a hydroxy group at main chain termini, on side chains, or both at a main chain terminus and on a side chain. The curing agent to be used is a carboxyl-containing resin or compound when the resin contains an epoxy group, an epoxy-containing resin when it contains a carboxyl group, and an amino resin, polyisocyanate and/or blocked polyisocyanate when it contains a hydroxy group, and one or more kinds of curing agent are used.

The acrylic resin containing at least two functional groups selected from the group consisting of an alkoxysilyl group, an epoxy group, a carboxyl group and a hydroxy group can readily by prepared by copolymerizing, by a method known in the art, at least two monomers selected from the group consisting of an alkoxysilyl-containing vinyl monomer, an epoxy-containing vinyl monomer, a carboxyl-containing vinyl monomer, a hydroxy-containing vinyl monomer with some other copolymerizable vinyl monomer.

As the alkoxysilyl-containing vinyl monomer, epoxy-containing vinyl monomer, carboxyl-containing vinyl monomer, hydroxy-containing vinyl monomer and other copolymerizable vinyl monomer, there may be mentioned the same species as mentioned hereinabove.

Among the heat-curable coating compositions mentioned above, those mainly comprising an acrylic resin capable of forming the above carboxyl-epoxy crosslinks, those mainly comprising an acrylic resin capable of forming said silicone crosslinks, those mainly comprising an acrylic resin whose hydroxy and alkoxysilyl groups are used for crosslinking, those mainly comprising an acrylic resin whose hydroxy, epoxy and alkoxysilyl groups are used for crosslinking and those mainly comprising a combination of acrylic resins whose hydroxy, epoxy, carboxyl and alkoxysilyl groups are used for crosslinking, for example a combination of the above-mentioned hydroxy-, epoxy- and alkoxysilyl-containing resin and the above-mentioned carboxyl-containing resin or compound, are particularly preferred in the practice of the present invention since they can give cured coating films excellent in acid resistance, scratch resistance, appearance, stain resistance and weathering resistance and provide the coating with heat curability.

The organic solvent to be contained in the above heat-curable coating composition may adequately be selected from among those which are known in the art and substantially inactive against the heat-curable coating composition and can dissolve or disperse the heat-curable coating composition.

Such organic solvent is not particularly restricted, but includes hydrocarbon solvents such as toluene and xylene; ketone solvents such as methyl ethyl ketone and methyl isobutyl ketone; ester solvents such as ethyl acetate and butyl acetate; ether solvents such as dioxane and ethylene glycol diethyl ether; alcohol solvents such as butanol and propanol; aliphatic hydrocarbon solvents such as pentane, hexane and heptane; and so forth.

These may be used singly or two or more of them may be used combinedly.

Considering the cured coating film appearance and the workability in the coating step, the content of the above-mentioned heat-curable organic resin in the above heat-curable coating composition is preferably 5 to 90% by weight, more preferably 10 to 80% by weight, most preferably 15 to 75% by weight. The content of the above organic solvent in the heat-curable coating composition is preferably 10 to 95% by weight, more preferably 20 to 95% by weight, most preferably 25 to 85% by weight.

The above partial hydrolyzate condensate of an organosilicate compound is incorporated in the top coating for the purpose of improving the stain resistance of the cured coating film.

The above partial hydrolyzate condensate of an organosilicate compound is represented by the general formula (1):

(R¹O)₄₋ₐ-Si-(R²)ₐ (1)

In the above general formula, R¹ represents a hydrogen atom or a monovalent hydrocarbon group selected from among an alkyl group containing 1 to 10 carbon atoms, an aryl group containing 6 to 10 carbon atoms and an aralkyl group containing 7 to 11 carbon atoms and R² represents a monovalent hydrocarbon group selected from among an alkyl group containing 1 to 10 carbon atoms, an aryl group containing 6 to 10 carbon atoms and an aralkyl group containing 7 to 11 carbon atoms.

Referring to the above R¹ and R², alkyl groups containing 1 to 4 carbon atoms are preferred among alkyl groups containing 1 to 10 carbon atoms. As aryl groups containing 6 to 10 carbon atoms, aryl groups containing 6 to 9 carbon atoms, such as phenyl, are preferred. As aralkyl groups containing 7 to 11 carbon atoms, aralkyl groups containing 7 to 9 carbon atoms, such as benzyl, are preferred.

For providing the coating composition with better heat curability, it is preferred that the above R¹ and R² each be an alkyl group. More preferred is an alkyl group containing 1 to 4 carbon atoms.

The symbol a represents 0 or 1. Thus, one and the same molecule contains three or four (R¹O) groups. It is not always necessary that the three or four (R¹O) groups occurring in one and the same molecule be the same. When a is more than 1, the stain resistance of the coat decreases.

The above organosilicate compound is not particularly restricted, but includes tetraalkyl silicates (tetraalkoxysilanes) such as tetramethyl silicate, tetraethyl silicate, tetra-n-propyl silicate, tetraisopropyl silicate, tetra-n-butyl silicate, tetraisobutyl silicate and tetra-tert-butyl silicate; alkyltrialkoxysilanes such as methyltrimethoxysilane, methyltriethoxysilane, methyltri-sec-octyloxysilane, methyltriisopropoxysilane and methyltributoxysilane; aryltrialkoxysilanes such as phenyltrimethoxysilane and phenyltriethoxysilane; alkyltriaryloxysilanes such as methyltriphenoxysilanes; and like trialkoxysilanes and triaryloxysilanes.

These may be used singly or two or more of them may be used combinedly.

The partial hydrolyzate condensate of the above organosilicate compound is not particularly restricted but includes those prepared in the conventional manner by adding water to the organosilicate compounds such as tetraalkyl silicates, trialkoxysilanes and triaryloxysilanes to thereby cause partial hydrolysis and condensation.

These may be used singly or two or more of them may be used combinedly.

As suitable examples of the above partial hydrolyzate condensate of an organosilicate compound, there may be mentioned partial hydrolyzate condensates of tetraalkyl silicate, such as Mitsubishi Chemical's MS51, MS56 and MS56S, Colcoat's MSI51 and ESI140 and Tama Chemical's Ethyl Silicate 48 and FR-3 (all being trademarks). Further, from the coating stability viewpoint, partial hydrolyzate condensates of methoxy type organosilicate compounds are preferred as the above partial hydrolyzate condensate of an organosilicate compound.

The partial hydrolyzate condensate of an organosilicate compound preferably has a weight average molecular weight of 400 to 50,000. When the above molecular weight is less than 400, the stain resistance of the cured coating film is poor. When it is above 50,000, the finishing of the cured coating film and the storage stability of the coating become poor. More preferred is 750 to 40,000.

It is preferred that partial hydrolyzate condensates of the tetraalkyl silicates mentioned above be used as the above partial hydrolyzate condensate of an organosilicate compound, since they have good compatibility with the heat-curable organic resin mentioned above and their use results in suppression of sticking of stains owing to good heat-curability of the coating and high cured coating film hardness and in promoted elimination of stains upon rain fall owing to increased hydrophilicity of cured coating film surface. Since the above partial hydrolyzate condensate of an organosilicate compound can be synthesized with ease, it is preferred that the above partial hydrolyzate condensates of tetraalkyl silicate be further subjected to partial hydrolysis and condensation to a weight average molecular weight of about 400 to 50,000.

The above partial hydrolyzate condensate of an organosilicate compound is incorporated preferably in an amount of 1 to 70 parts by weight on the solid basis per 100 parts by weight, on the solid basis, of the above-mentioned heat curable organic resin. When the content of the partial hydrolyzate condensate of an organosilicate compound is less than 1.0 part by weight, the cured coating films cannot show satisfactory antistaining effects. When it exceeds 70 parts by weight, the shock resistance and appearance of the cured coating film become worse. More preferred is 1.5 to 50 parts by weight, and particularly more preferred is 2.5 to 30 parts by weight.

For increasing the rate of curing of the top coating mentioned above, a curing catalyst may be incorporated in the top coating to be used in the practice of the present invention.

The curing catalyst is not particularly restricted, but includes organotin compounds such as dibutyltin dilaurate, dibutyltin dimaleate, dioctyltin dilaurate, dioctyltin dimaleate and stannous octylate; phosphoric acid or phosphoric esters such as phosphoric acid, monomethyl phosphate, monoethyl phosphate, monobutyl phosphate, monooctyl phosphate, monodecyl phosphate, dimethyl phosphate, diethyl phosphate, dibutyl phosphate, dioctyl phosphate and didecyl phosphate; addition reaction products from phosphoric acid and/or a phosphoric mono ester with an epoxy compound such as propylene oxide, butylene oxide, cyclohexene oxide, glycidyl methacrylate, glycidol, acryl glycidyl ether, γ-glycidoxypropyltrimethoxysilane, γ-glycidoxypropyltriethoxysilane, γ-glycidoxypropylmethyldimethoxysilane, Yuka Shell Epoxy's Cardura E, Epikote 828 or Epikote 1001 (trademarks); organic titanate compounds; organoaluminum compounds; organozinc compounds; carboxylic acid compounds (organic carboxylic acid compounds) such as maleic acid, adipic acid, azelaic acid, sebacic acid, itaconic acid, citric acid, succinic acid, phthalic acid, trimellitic acid and pyromellitic acid, and acid anhydrides of these; sulfonic acid compounds (organic sulfonic acid compounds) such as dodecylbenzenesulfonic acid, p-toluenesulfonic acid, 1-naphthalenesulfonic acid and 2-naphthalenesulfonic acid; products (acid-amine reaction products) of blocking of the above sulfonic acid compounds with a nitrogen-containing compound (e.g. 1-amino-2-propanol, monoethanolamine, diethanolamine, 2-(methylamino)ethanol, 2-dimethylethanolamine, 2-amino-2-methyl-1-propanol, diisopropanolamine, 3-aminopropanol, 2-methylamino-2-methylpropanol, morpholine, oxazolidine, 4,4-dimethyloxazolidine, 3,4,4-trimethyloxazolidine), for example King Industries' Nacure 5225, Nacure 5543 and Nacure 5925 (trademarks); amines such as hexylamine, di-2-ethylhexylamine, N,N-dimethyldodecylamine, dodecylamine, DABCO, DBU, morpholine and diisopropanolamine; reaction products from these amines with an acidic phosphoric ester; and alkaline compounds such as sodium hydroxide and potassium hydroxide, among others. Among them, amine-blocked sulfonic acid compounds, acidic phosphoric ester-amine reaction products and organotin compounds are preferred from the viewpoint of good heat curability of coating, good cured coating film appearance and so on.

The above curing catalysts may be used singly or two or more species may be used combinedly.

The curing catalyst, if employed, is used preferably in an amount of 0.001 to 10 parts by weight on the solid basis per 100 parts by weight, on the solid basis, of the sum of the heat-curable coating composition and the partial hydrolyzate condensate of an organosilicate compound. When the addition amount of the curing catalyst is less than 0.001 part by weight, the heat-curability of the coating cannot be improved to a satisfactory extent. When it exceeds 10 parts by weight, the appearance of the cured coating film tends to become worse. More preferred is 0.05 to 10 parts by weight.

In accordance with the first aspect of the present invention, electrostatic coating is carried out while circulating the top coating mentioned above.

The term "circulating" means that, in the step of electrostatic coating with the above top coating, the top coating received in a circulation tank is fed to an electrostatic coater by means of a pipe and the like, and then returned again to the above tank. The solid concentration of the top coating to be circulated is preferably 20 to 60% by weight.

In accordance with the first aspect of the invention, an aromatic hydrocarbon, an alcohol and a dehydrating agent are injected into the above circulation tank for circulating the top coating for the purpose of adjusting the viscosity and water content of the above top coating, whereby the viscosity of the top coating under circulation can be prevented from rising and thus the electrostatic coatability and the cured coating film characteristics, in particular stain resistance, can be maintained. Therefore, the method of coating adjustment according to the first aspect of the present invention can make it possible to adjust the viscosity of the top coating and realize the maintenance of the electrostatic coatability and the characteristics of the cured coating film and to perform the adjustment and control of the coating in the step of electrostatic coating with ease.

Thus, by injecting the aromatic hydrocarbon and alcohol, it becomes possible to suppress the increase in viscosity of the top coating under circulation and, since the electric resistance of the top coating changes little as a result of such injection, to maintain the electrostatic coatability. Further, the injection of the dehydrating agent makes it possible to decrease the moisture contained in the top coating as well as the moisture that has come into the top coating from the atmosphere, to thereby inhibit deterioration of the heat-curable coating composition, having the above silicone crosslink-forming acrylic resin as main component, and the partial hydrolyzate condensate of an organosilicate compound. It is thus possible to inhibit the increase in the viscosity of the top coating and maintain the electrostatic coatability and the cured coating film characteristics, in particular stain resistance.

Furthermore, by filling the circulation tank with nitrogen gas and further feeding nitrogen gas continuously to an extent such that it does not cause evaporation of the organic solvent, it is also possible to prevent moisture penetration into the top coating from the atmosphere.

The above aromatic hydrocarbon is not particularly restricted but, for example, at least one selected from the group consisting of benzene, toluene, xylene, ethylbenzene, isopropylbenzene, amylnapthalene and the like may be used.

The above alcohol is not particularly restricted but includes, for example, at least one member selected from among lower alcohols such as methanol, ethanol, isopropyl alcohol, 1-butanol, isobutyl alcohol, etc.

The above dehydrating agent is not particularly restricted but, for example, at least one selected from the group consisting of trimethyl orthoacetate, triethyl orthoacetate, trimethyl orthoformate, triethyl orthoformate and the like may be used.

The above aromatic hydrocarbon, alcohol and dehydrating agent may be injected separately or as a mixture thereof once or a plurality of times. For increasing the efficiency of injection into the circulation tank and adjusting the concentration of the dehydrating agent to be injected, it is preferred that all the aromatic hydrocarbon, alcohol and dehydrating agent be added as a mixture.

The proportions of the above aromatic hydrocarbon, alcohol and dehydrating agent to be injected are preferably such that the aromatic hydrocarbon accounts for 10 to 90% by weight, the alcohol for 2 to 30% by weight and the dehydrating agent for 90 to 10% by weight. It is to be noted that the total of the aromatic hydrocarbon, alcohol and dehydrating agent is equal to 100% by weight. It is more preferred that the above aromatic hydrocarbon accounts for 30 to 70% by weight, the alcohol for 5 to 25% by weight and the dehydrating agent for 70 to 30% by weight. The respective amounts of the above aromatic hydrocarbon, alcohol and dehydrating agent to be injected are preferably selected so that the viscosity of the top coating in the circulation tank will be about 20 to 30 seconds as measured by a Ford cup #4 at 20 °C.

In the practice of the present invention in accordance with the first aspect thereof, the moisture content of the top coat composition is preferably suppressed to an amount not higher than 2,000 ppm. When it exceeds 2,000 ppm, the increase in viscosity of the coating becomes remarkable, leading to failure of the cured coating film to show stain resistance. More preferred is not higher than 1,000 ppm, and particularly preferred is not higher than 500 ppm.

The second aspect of the present invention provides a method of finish-coating
which comprises applying, to a substrate, a heat-curable base coating [I] containing a metallic powder and/or a color pigment,
applying thereon a heat-curable top coating [i] containing 1 to 70 parts by weight (on the solid basis), per 100 parts by weight (on the solid basis) of a heat curable coating composition (A), of a partial hydrolyzate condensate (B) of an organosilicate compound represented by the general formula (1):

   (R¹O)₄₋ₐ-Si-(R²)ₐ (1)

   wherein R¹ represents a hydrogen atom or a monovalent hydrocarbon group selected from among an alkyl group containing 1 to 10 carbon atoms, an aryl group containing 3 to 10 carbon atoms and an aralkyl group containing 5 to 10 carbon atoms, R² represents a monovalent hydrocarbon group selected from among an alkyl group containing 1 to 10 carbon atoms, an aryl group containing 3 to 10 carbon atoms and an aralkyl group containing 5 to 10 carbon atoms and a represents 0 or 1, followed by subjecting both coating films to simultaneous thermal curing,
and further applying a heat-curable base coating [II] containing 0.01 to 30 parts by weight, per 100 parts by weight of the resin solids, of a silane coupling agent,
applying thereon a heat curable top coating [i],
and then subjecting both coating films to simultaneous thermal curing.

### Heat curable base coating [I]

The heat curable base coating [I] to be used in the second aspect of the invention contains a metallic powder and/or a color pigment. The heat curable base coating [I] is not particularly restricted but includes any heat-curable coating known in the art provided that it contains a metallic powder and/or a color pigment. Thus, a coating composition may contain a heat-curable resin component, a metallic powder and/or a color pigment and an organic solvent as main components and further contain, if necessary, a extender pigment, a viscosity modifier, a coating film surface modifier and so on. The above heat-curable base coating [I] is preferably an organic solvent-based one or a nonaqueous dispersion type one.

The above metallic powder and color pigment is not particularly restricted but may be one in conventional use. Thus, the metallic powder includes, among others, aluminum powder, copper powder, mica powder and the like. The color pigment includes organic pigments such as phthalocyanine blue, toluidine red and benzidine yellow and inorganic pigments such as titanium oxide, carbon black and red iron oxide. These metallic powders and color pigments may be used each alone or two or more species may be used in a suitable combination.

The above heat-curable organic resin composition is not particularly restricted but may comprise a basal resin selected from, for example, among alkyd resins, polyester resins, acrylic resins, cellulosic resins and the like and a crosslinking agent selected from among, for example, amino resins, isocyanate compounds, blocked isocyanate compounds and so forth. These basal resins and crosslinking agents may be those known in the art.

The weathering resistance of the coat can be further improved by incorporating an ultraviolet absorber and/or a light stabilizer in the heat-curable base coating [I].

### Heat-curable base coating [II]

The heat-curable base coating [II] to be used in the practice of the second aspect of the present invention contains a silane coupling agent. The heat-curable base coating [II] may comprise a base coating used in conventional ordinary coating by further adding a silane coupling agent. Thus, for example, a composition comprising the above heat-curable base coating [I] and a silane coupling agent can judiciously be used.

The above silane coupling agent is not particularly restricted but may be a commercially available one known in the art. Thus, it includes, but is not limited to, vinylsilanes, epoxysilanes, methacryloxysilanes, aminosilanes, chlorosilanes, mercaptosilanes and the like.

As the above silane coupling agent, there may be mentioned, for example, vinyltrichlorosilane, vinyltrimethoxysilane, vinyltriethoxysilane, vinyltris(β-methoxyethoxy)silane, β-(3,4-epoxycyclohexyl)ethyltrimethoxylsialne, γ-glycidoxypropyltrimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β-(aminoethyl)-γ-aminopropylmethyldimethoxysilane, N-β-(aminoethyl)-γ-aminopropyltrimethoxysilane, N-β-(aminoethyl)-γ-aminopropyltriethoxysilane, γ-aminopropyltrimethoxysilane, γ-aminopropyltriethoxysilane, N-phenyl-γ-aminopropyltrimethoxysilane, γ-chloropropyltrimethoxysilane and γ-mercaptopropyltrimethoxysilane. Modified silane coupling agents such as the reaction products of an epoxysilane with an aminosilane and the reaction product of an epoxy compound with an aminosilane may be used. The above silane coupling agents may be used singly or two or more of them may be used in a suitable combination.

As the above silane coupling agent, preferred are aminosilanes, epoxysilanes, mercaptosilanes, reaction products of an aminosilane with an epoxysilane, and methacryloxysilanes.

The addition amount of the silane coupling agent is 0.01 to 30 parts by weight per 100 parts by weight, on the solid basis, of the heat-curable resin in the heat-curable base coating [II]. When the amount of the silane coupling agent is less than 0.01 part by weight, the adhesion of the recoat decreases. When it is over 30 parts by weight, the appearance becomes worsen, the storage stability decreases and an increased cost results. Preferred is 0.02 to 20 parts by weight, and more preferred is 0.05 to 15 parts by weight.

### Heat-curable top coating [i]

The heat-curable top coating [i] comprises a heat-curable coating composition (A) and a partial hydrolyzate condensate (B) of an organosilicate compound.

The heat-curable top coating [i] is a heat-curable coating for clear coating. Generally, it does not contain any pigment and, when applied onto the coating film of the heat-curable base coating [I], forms a transparent coating film.

As the above heat-curable coating composition (A), there may be mentioned, for example, one prepared by dissolving or dispersing a resin composition comprising a heat-curable organic resin and, if necessary, a pigment, a leveling agent, an ultraviolet absorber, a light stabilizer, etc., in an organic solvent. For increasing the rate of curing of the heat-curable organic resin, any of various curing catalysts (C) may be incorporated therein.

As the above heat-curable coating composition (A), there may be mentioned, for example, the same species as those to be used in the practice of the present invention in accordance with the first aspect thereof.

The above heat-curable organic resin is not particularly restricted, but includes alkyd resins, polyester resins, acrylic resins and cellulosic resins, for instance. The crosslinking agent to be used combinedly with these resins includes, among others, amino resins, isocyanate compounds, blocked isocyanate compounds and so on. These basal resins and crosslinking agents may be those known in the art. Further, there may be mentioned heat-curable modified silicone resins, heat-curable fluororesins, acrylic resins capable of forming acid group-epoxy group crosslinks, and the like.

These may be used singly or two or more of them may be used combinedly.

As the above heat-curable organic resin, there may be mentioned those species to be used in the practice of the first aspect of the present invention.

The partial hydrolyzate condensate (B) of an organosilicate compound, which is the second component in the above heat-curable top coating [i] is the partial hydrolyzate condensate (B) of an organosilicate compound represented by the general formula (1) given hereinabove. The above component (B) can improve the stain resistance of the coating film formed when it is incorporated in an organic coating composition, preferably an organic coating composition containing the above heat-curable coating composition (A) as the resin component.

In the above general formula (1), R¹ represents a hydrogen atom or a monovalent hydrocarbon group selected from among alkyl groups containing 1 to 10 carbon atoms, aryl groups containing 3 to 10 carbon atoms and aralkyl groups containing 5 to 10 carbon atoms. R² represents a monovalent hydrocarbon group selected from among alkyl groups containing 1 to 10 carbon atoms, aryl groups containing 3 to 10 carbon atoms and aralkyl groups containing 5 to 10 carbon atoms.

Referring to the above R¹ and R², alkyl groups containing 1 to 4 carbon atoms are preferred among the alkyl groups containing 1 to 10 carbon atoms. Among the aryl groups containing 3 to 10 carbon atoms, aryl groups containing 6 to 9 carbon atoms, such as phenyl, are preferred. As the aralkyl groups containing 5 to 10 carbon atoms, aralkyl groups containing 7 to 9 carbon atoms, such as benzyl, are preferred.

For providing the coating composition with good heat curability, it is preferred that each of the above R¹ and R² be an alkyl group. More preferred is an alkyl group containing 1 to 4 carbon atoms.

The symbol a represents 0 or 1. Thus, three or four (R¹O) groups exist in one and the same molecule. However, the three or four (R¹O) groups occurring in each molecule need not be the same. When a is more than 1, the stain resistance of the coat decreases.

The organosilicate compound represented by the above general formula (1) is not particularly restricted, but includes tetraalkyl silicates (tetraalkoxysilanes) such as tetramethyl silicate, tetraethyl silicate, tetra-n-propyl silicate, tetraisopropyl silicate, tetra-n-butyl silicate, tetraisobutyl silicate and tetra-tert-butyl silicate; alkyltrialkoxysilanes such as methyltrimethoxysilane, methyltriethoxysilane, methyltri-sec-octyloxysilane, methyltriisopropoxysilane and methyltributoxysilane; aryltrialkoxysilanes such as phenyltrimethoxysilane and phenyltriethoxysilane; alkyltriaryloxysilanes such as methyltriphenoxysilanes; and like trialkoxysilanes and triaryloxysilanes.

The partial hydrolyzate condensate (B) of the above organosilicate compound of the above general formula (1) is not particularly restricted but includes, for example, those prepared in the conventional manner by adding water to the organosilicate compounds such as tetraalkyl silicates, trialkoxysilanes and triaryloxysilanes to thereby cause partial hydrolysis and condensation.

The partial hydrolyzate condensate (B) of the above organosilicate compound preferably has a weight average molecular weight of 400 to 50,000. When the above molecular weight is less than 400, the stain resistance is poor. When it is over 50,000, the finishing of the cured coating film and the storage stability become poor. More preferred is 750 to 40,000.

As the above partial hydrolyzate condensate (B) of the above organosilicate compound, there may be mentioned tetraalkyl silicate-derived partial hydrolyzate condensates, such as MS51, MS56 and MS56S (trademarks; products of Mitsubishi Chemical), MSI51 and ESI140 (trademarks; products of Colcoat) and Ethyl Silicate 48 and FR-3 (trademarks; products of Tama Chemical). Among them, those having a weight average molecular weight of about 400 to 50,000 as obtained by further subjecting the above partial hydrolyzate condensates of tetraalkyl silicate to partial hydrolysis and condensation. From the viewpoint of the stability of the partial hydrolyzate condensate of an organosilicate compound obtained, those derived from methoxy type organosilicate compounds are preferred. These may be used singly or two or more of them may be used combinedly.

It is preferred that the above partial hydrolyzate condensate (B) be a partial hydrolyzate condensate from a tetraalkyl silicate, since it has good compatibility with the heat-curable organic resin mentioned above and the use thereof gives good curability to the composition obtained and results in suppression of sticking of stains owing to the resulting high coating film hardness and in promoted elimination of stains upon rain fall owing to increased cured coating film surface hydrophilicity.

When the ease of synthesis of the partial hydrolyzate condensate having a weight average molecular weight suited for use in the practice of the second aspect of the present invention is taken into consideration, it is preferred that the partial hydrolyzate condensate (B) can be obtained by modifying the above partial hydrolyzate condensate of tetraalkyl silicate by further partial hydrolysis and condensation until a weight average molecular weight of about 400 to 50,000 is attained.

The addition amount of the above partial hydrolyzate condensate (B) is 1 to 70 parts by weight on the solid basis per 100 parts by weight on the solid basis, of the above-mentioned heat-curable coating composition (A). When the content of the partial hydrolyzate condensate (B) is less than 1.0 part by weight, only insufficient antistaining effects are obtained. When it exceeds 70 parts by weight, the shock resistance and appearance deteriorate. Preferred is 1.5 to 50 parts by weight, and more preferred is 2.5 to 30 parts by weight.

### Heat-curable top coating [ii]

In the practice of the second aspect of the present invention, the above heat-curable top coating [ii] is not particularly restricted but may be a composition in ordinary use as a top-coat clear coating composition, for example one comprising the above heat-curable coating composition (A). Although the above-mentioned heat-curable top coating [i] may be used as the above heat-curable top coating [ii], it is not always necessary to use the former but a coating other than the above heat-curable top coating [i] may be used.

In the method of finish-coating according to the second aspect of the invention, the heat-curable base coating [I], which contains the above metallic powder and/or color pigment, may be directly applied to a substrate but it is preferred that a primer and a heat-curable intermediate coating, such as an electrodeposition coating (anionic type or cationic type) known in the art, be applied and, after curing of these coatings, the composition [I] be applied.

The above substrate is not particularly restricted but includes, among others, automobiles and domestic electric appliances.

An atomizing coater is preferably used as the coater. As such, there may be mentioned an air spray coater, an air spray and air atomizing type or rotary type electrostatic coater and the like. In the step of coating, the viscosity of the coating is preferably adjusted to 10 to 40 seconds (20 °C), more preferably 11 to 20 seconds (20 °C), as expressed in terms of No. 4 Ford cup viscosity. The coating thickness is preferably 2 to 30 µm, more preferably 5 to 25 µm, on the heated and cured film basis.

In accordance with the method of finish-coating according to the second aspect of the present invention, the heat-curable top coating [i] containing an partial hydrolyzate condensate (B) of organosilicate as incorporated therein is applied, after application of the above heat-curable base coating [I], in a cured thickness of 20 to 50 µm. Then, after allowing to stand at ordinary temperature for several minutes, both the base coating film and top coating film are, or the top coating film is, cured by heating at 80 to 160°C for 10 to 30 minutes. Thereto is further applied the silane coupling agent-containing heat-curable base coating [II], then the heat-curable top coating [ii] is applied and, allowing to stand at ordinary temperature for several minutes, both coats are cured by heating at 80 to 160 °C for 10 to 30 minutes.

### BEST MODE FOR CARRYING OUT THE INVENTION

### Production Example 1 Production of base coating

An acrylic resin solution (BR-1) with a residue on heating of 50% by weight was prepared by carrying out copolymerization in xylene using 10% by weight of styrene, 25% by weight of methyl methacrylate, 35% by weight of butyl acrylate, 13% by weight of 2-ethylhexyl methacrylate, 15% by weight of hydroxyethyl methacrylate, 2% by weight of acrylic acid and 1% by weight of the polymerization initiator azobisisobutyronitrile. A base coating was prepared by blending 140 weight parts of this acrylic resin solution BR-1 (50% by weight), 50 weight parts of a melamine-formaldehyde resin (55% by weight, U-Van 28SE (trademark), product of Mitsui Toatsu Chemical), 2 weight parts of carbon black (Mitsubishi Carbon Black MA-100 (trademark), product of Mitsubishi Chemical) and 13 weight parts of a pearl mica pigment (FINE PE ARL (trademark), product of Marl). For this preparation, the respective components were mixed up and dispersed in a mixed solvent (BC-1) composed of 55 weight parts of ethyl acetate, 55 weight parts of toluene, 25 weight parts of isobutanol and 35 weight parts of Swasol 1000 (trademark, product of Maruzen Petroleum) to give a mixed solution having a viscosity of 14 seconds (Ford cup #4/20 °C) (residue upon heating: 30% by weight). Using the mixed solution obtained, base coatings B1 to B6 were prepared according to the formulations shown in Table 1 on the solid basis (exclusive of carbon black and the pearl mica pigment).

In the table, the symbols denote the following:
KBM-403: Epoxysilane (product of Shin-Etsu Silicone);
KBM-903: Aminosilane (product of Shin-Etsu Silicone);
A189: Mercaptosilane (product of Nippon Unicar);
RSC-1: Reaction product from KBM-403 and KBM-903.

**Table 1**

| | | B-1 | B-2 | B-3 | B-4 | B-5 | B-6 |
|---|---|---|---|---|---|---|---|
| BC-1 | | 100 | 100 | 100 | 100 | 100 | 100 |
| Silane coupling agent | KBM-403 | 3 | | | | 7 | |
| | KBM-903 | | 0.5 | | | | |
| | A189 | | | 5 | | | |
| | RSC-1 | | | | 2 | | |

### Production Example 2 Production of top coating

### 1. Production of heat-curable organic resins

A reactor equipped with a stirrer, thermometer, reflux condenser, nitrogen gas inlet tube and drip funnel was charged with a solvent (1) and the temperature was raised to 110 °C while introducing nitrogen gas into the reactor. Then a vinyl monomer composition was added dropwise from the drip funnel at a constant rate over 5 hours.

Then, a solvent (2) was added dropwise to the above reactor at a constant rate over 1 hour. Thereafter, the whole mixture was stirred at 110 °C for 2 hours and then cooled to room temperature. Finally, a solvent (3) was added, followed by stirring, to give a heat-curable organic resin, namely a hydroxy-containing acrylic resin (TB-1), an epoxy-containing acrylic resin (TB-2), an epoxy- and hydroxy-containing acrylic resin (TB-3), an alkoxysilyl-containing acrylic resin (TB-4), an alkoxysilyl- and hydroxy-containing acrylic resin (TB-5), an alkoxysilyl-, epoxy- and hydroxy-containing acrylic resin (TB-6) or an acid anhydride moiety-containing acrylic resin (TB'-7).

The solvents (1), (2) and (3) and the above vinyl monomer composition were as shown in Table 2.

The solid concentration of each of the above heat-curable organic resins obtained and the number average molecular weight of each heat-curable organic resin as determined by gel permeation chromatography (GPC) are shown in Table 2.

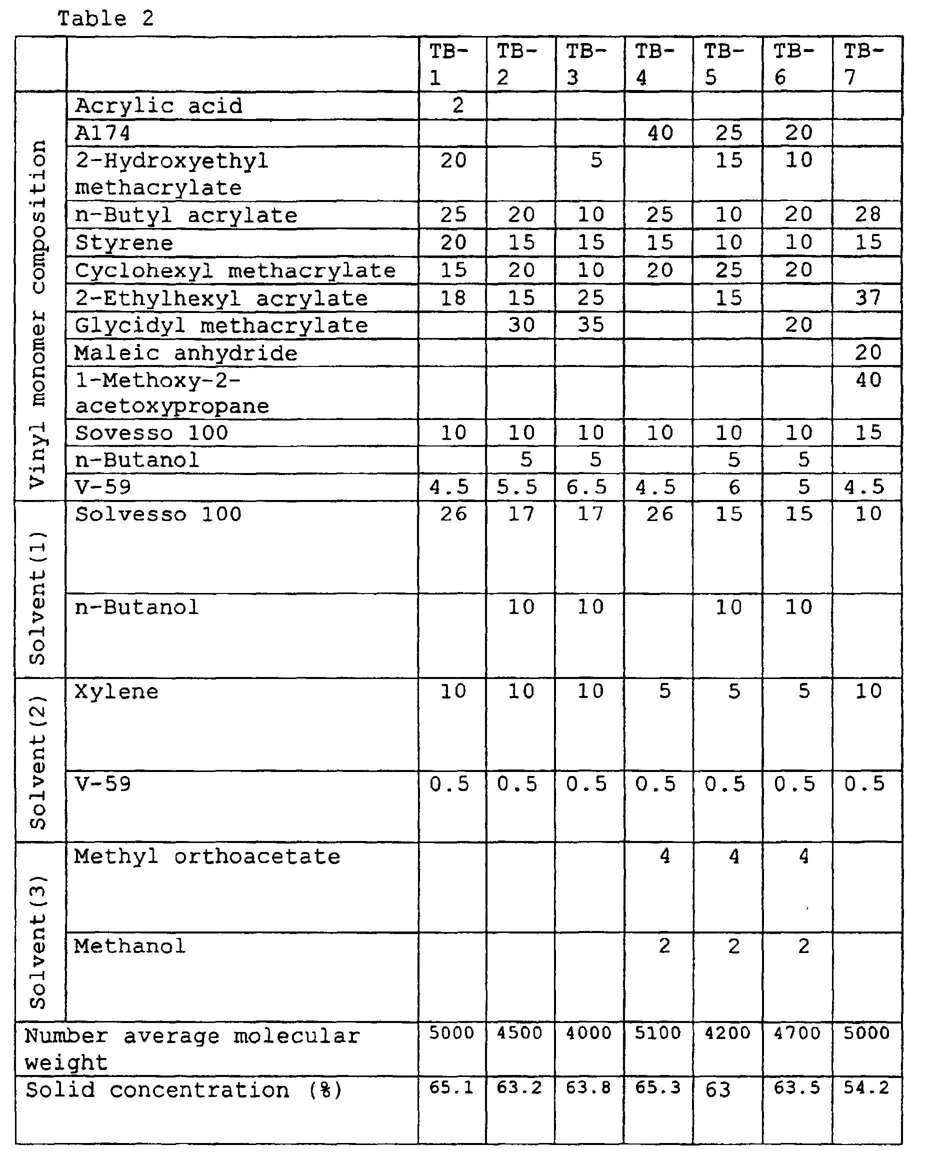

Separately, a solution of 1 weight part of triethylamine in 10 weight parts of butyl acetate and 15 weight parts of methanol were added to 200 weight parts of the acid anhydride moiety-containing acrylic resin (TB'-7) obtained in the above manner, and the reaction was allowed to proceed at 60 °C for 8 hours to give a carboxy-containing acrylic resin (TB-7).

Furthermore, a reactor equipped with a stirrer, thermometer, reflux condenser and nitrogen gas inlet was charged with a mixed solution composed of 35 weight parts of pentaerythritol, 170 weight parts of methylhexahydrophthalic anhydride, 110 weight parts of propylene glycol monomethyl ether acetate and 0.07 part of triethylamine, and the reaction was allowed to proceed at 120 °C for 4 hours to give a carboxyl-containing compound (TB-8).

### 2. Production of top coating

The heat-curable organic resin solutions (TB-1 to TB-8) obtained in the above manner were each blended with an partial hydrolyzate condensate of an organosilicate compound, together with or without a crosslinking agent and/or a curing catalyst, according to the formulations shown in Table 3 to give coating compositions (T-1 to T-13).

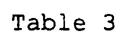

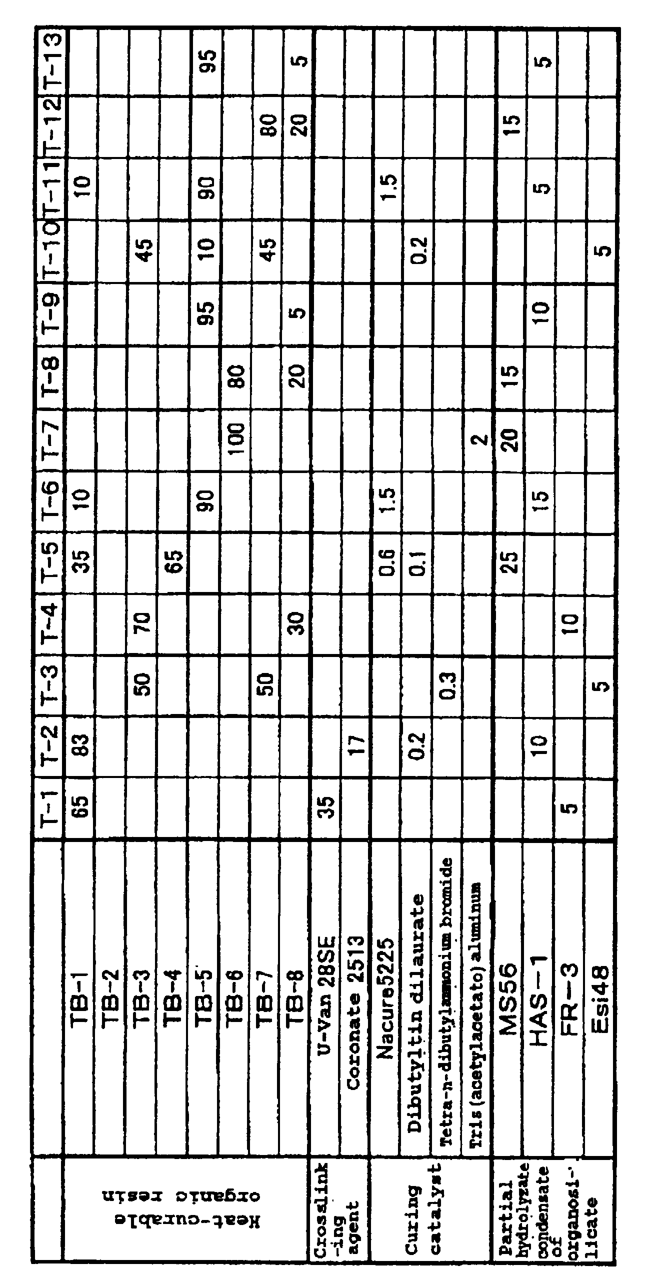

The suppliers of the products mentioned in the above table are as follows:
- U-Van 28SE:: Mitsui-Toatsu Chemical;
- Coronate 2513:: Nippon Polyurethane Industry;
- Nacure 5225:: King Industries;
- MS56:: Mitsubishi Chemical;
- HAS-1:: Colcoat;
- FR-3:: Tama Chemical;
- Esi 48:: Colcoat

Further, 0.4 weight part of a leveling agent (Disparlon L-1984-50, product of Kusumoto Kasei), 2 weight parts of an ultraviolet absorber (Tinuvin 384, product of Ciba-Geigy) and 1 weight part of a light stabilizer (Tinuvin 123, product of Ciba-Geigy) were added to 100 weight parts (as solids) of each of the coating compositions obtained above (T-1 to T-13) to give top coatings.

### Example 1 to 13

Each top coating was adjusted to a viscosity of 23 seconds (Ford cup #4, 20 °C) by diluting with Solvesso 100, and 300 grams of the dilution was placed in a 500-ml beaker. After the beaker was covered with an aluminum foil, the cover was further formed with 15 perforations with a diameter of 1 mm each, and the whole was allowed to stand in a constant-temperature, constant-humidity chamber maintained at a temperature of 25 °C and a relative humidity of 65%, while stirring with a magnetic stirrer. About 2 grams of a viscosity/water content adjusting composition was supplemented at 2-day intervals.

The top coatings (T-1 to T-10) and viscosity/water content adjusting compositions used are shown in Table 4.

### Evaluation methods

### (1) Viscosity

Immediately after coating preparation and after the lapse of 20 days, the viscosity of each coating composition was measured using a Ford cup #4 (20 °C). The results are shown in Table 4.

### (2) Electric resistance

Immediately after coating composition preparation and after the lapse of 20 days, the electric resistance was measured. The results obtained are shown in Table 4.

### (3) Water content

Immediately after coating composition preparation and after the lapse of 10 and 20 days, the water content was measured. The results obtained are shown in Table 4.

### (4) Stain resistance

Degreased and phosphatized steel sheets coated with an epoxy-amide type cationic electrodeposition primer for automotive use and an intermediate surfacer were used as test specimens. To the surface of each test specimen was applied an acryl-melamine resin coating composition containing a white pigment as a base coat. After 5 to 10 minutes of setting, the coating to be tested was applied in the wet-on-wet manner directly after preparation thereof or after the lapse of 20 days and, after 10 minutes of setting, baking was carried out at 140 °C for 30 minutes to form a coating film.

The base coating film had a dry thickness of about 15 µm and the thickness of the top coating film was about 30 to 40 µm for the coating just after preparation and for the composition after the lapse of 20 days.

Three-month outdoor exposure was performed in Settsu City, Osaka Prefecture, Japan, with the test specimen facing South at an angle of 30° and the L*a*b* was measured before and after exposure using a colorimeter/color difference meter (Minolta model CR-300). The difference in lightness between before and after exposure (ΔL* value) was taken as a measure of staining. A smaller numerical value indicates a lower level of stain resistance while a greater numerical value indicates a higher level of stain resistance. The results obtained are shown in Table 4.

### Comparative Example 1 to 4

The viscosity, electric resistance, water content and stain resistance were measured in the same manner as in Examples 1 to 13 except that xylene was used as the viscosity adjusting agent. The results thus obtained are shown in Table 4.

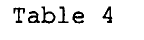

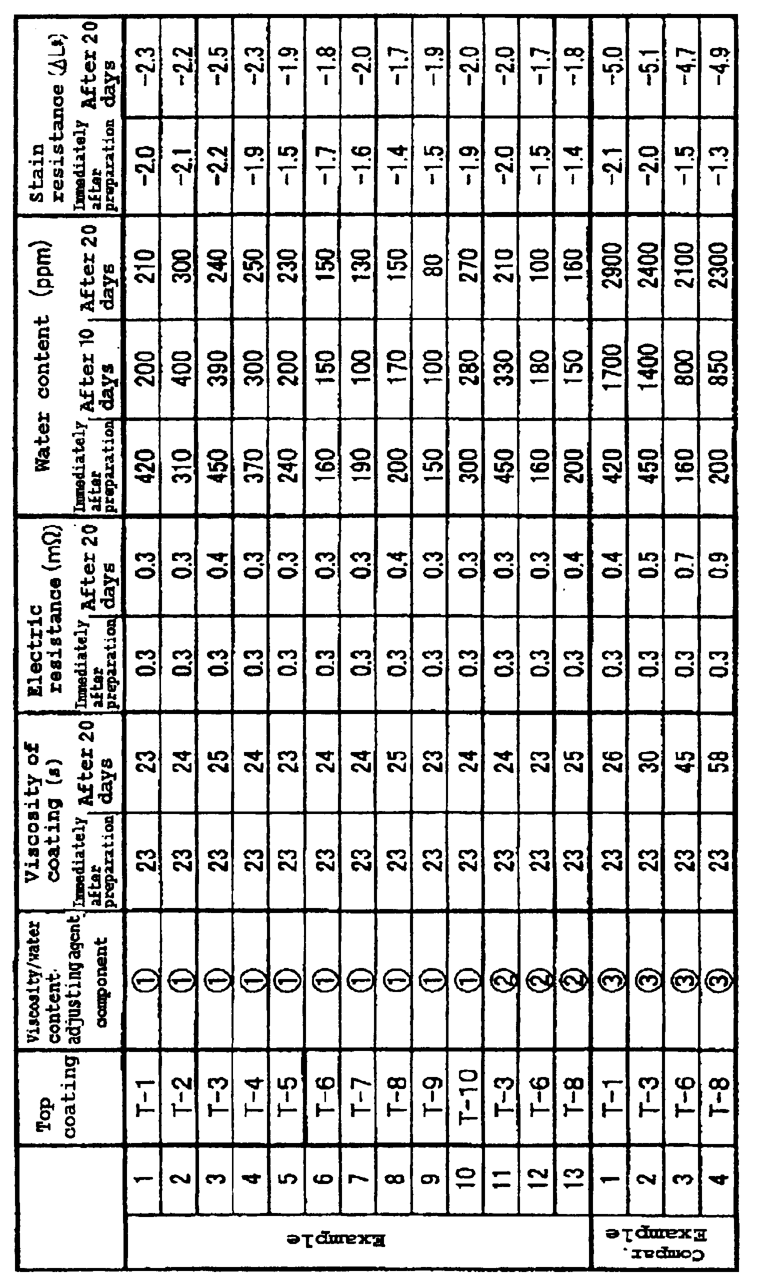

The composition of each viscosity/water content adjusting agent shown in the table is as follows:
Viscosity/water content adjusting agent: Xylene:methyl orthoacetate:methanol = 50:45:5;
Viscosity/water content adjusting agent: Xylene:methyl orthoacetate:2-propanol = 60:30:10;
Viscosity adjusting agent: Xylene.

As is evident from the results shown in Table 4, when a mixture composed of an aromatic hydrocarbon, alcohol and dehydrating agent was used as the viscosity/water content adjusting agent, the changes in viscosity, electric resistance, water content and stain resistance were slight and it was thus confirmed that the electrostatic coatability and cured coating film characteristics, in particular stain resistance, can be maintained by using such a mixture.

When xylene was used as the viscosity adjusting agent, the changes in viscosity, electric resistance, water content and stain resistance were remarkable and it was thus confirmed that the electrostatic coatability and cured coating film characteristics, in particular stain resistance, cannot be maintained by using xylene.

### Examples 14 to 21 and Comparative Examples 5 to 7

Each top coating was adjusted to a No. 4 Ford cup viscosity of about 20 to 25 seconds by diluting with Solvesso 100.

Degreased and phosphatized steel sheets coated with an epoxy-amide type cationic electrodeposition primer for automotive use and an intermediate surfacer were used as test specimens. The base coating (B-6) was applied to the test specimens and, after allowing to stand at ordinary temperature for 5 minutes, the top coat compositions T1 to T13 obtained in Production Example 2 were respectively applied in the wet-on-wet manner and, after 10 minutes of setting, baking was performed at 160 °C for 30 minutes. These coated sheets were coated with the base coatings B1 to B6 prepared in Production Example 1, respectively, and then recoated with the top coatings in the wet-on-wet manner and, after 10 minutes of setting, baking was carried out at 120 °C for 30 minutes. The dry thickness was about 15 µm for the base coats and about 30 to 40 µm for the top clear coats. The thus-coated sheets were immersed in warm water at 40 °C for 10 days and then evaluated for adhesion (recoat adhesion) according to the cross-cut method (2 mm × 2 mm × 25) described in JIS K5400. The results obtained are shown in Table 5.

**Table 5**

| | | Example | | | | | | | | Compar. Ex. | | |
|---|---|---|---|---|---|---|---|---|---|---|---|---|
| | | 14 | 15 | 16 | 17 | 18 | 19 | 20 | 21 | 5 | 6 | 7 |
| Base coating for primary coating | | B6 | B6 | B6 | B6 | B6 | B6 | B6 | B6 | B6 | B6 | B6 |
| Top coating for primary coating | | T1 | T2 | T3 | T4 | T5 | T11 | T7 | T12 | T1 | T3 | T7 |
| Base coating for recoating use | | B1 | B4 | B2 | B3 | B5 | B3 | B2 | B1 | B6 | B6 | B6 |
| Top coating for recoating use | | T1 | T2 | T3 | T4 | T5 | T11 | T7 | T12 | T1 | T3 | T7 |
| Adhesion of recoat | Before immersion in water | 10 | 10 | 10 | 10 | 10 | 10 | 10 | 10 | 8 | 7 | 9 |
| | After immersion in water | 10 | 10 | 10 | 10 | 10 | 10 | 10 | 10 | 0 | 0 | 0 |

### INDUSTRIAL APPLICABILITY

The method of coating adjustment according to the first aspect of the invention, which has the constitution described above, makes it possible to prevent the viscosity of the top coating in the circulation tank from rising in the step of electrostatic application of the top coating and to uphold the electrostatic coatability and cured coating film characteristics, in particular stain resistance.

The method of finish-coating according to the second aspect of the invention, which has the constitution described above, makes it possible to obtain coated articles with excellent adhesion of the recoat on a top coat formed using a top-coat clear coating containing an partial hydrolyzate condensate of an organosilicate compound and cured by heating.

## Claims

1. A method of coating adjustment in the electrostatic coating step of applying a top coating derived from a heat-curable coating composition containing a heat-curable organic resin by containing therein 1 to 70 parts by weight (on the solid basis), per 100 parts by weight (on the solid basis) of said heat-curable organic resin, of a partial hydrolyzate condensate of an organosilicate compound represented by the general formula (1):
(R¹O)₄₋ₐ-Si-(R²)ₐ (1)
wherein R¹ represents a hydrogen atom or a monovalent hydrocarbon group selected from among an alkyl group containing 1 to 10 carbon atoms, an aryl group containing 6 to 10 carbon atoms and an aralkyl group containing 7 to 11 carbon atoms, R² represents a monovalent hydrocarbon group selected from among an alkyl group containing 1 to 10 carbon atoms, an aryl group containing 6 to 10 carbon atoms and an aralkyl group containing 7 to 11 carbon atoms, and a represents 0 to 1,
which comprises injecting an aromatic hydrocarbon, an alcohol and a dehydrating agent into the circulation tank where the above top coating is circulated for the purpose of adjusting the viscosity and water content of the above top coating.

2. The method of coating adjustment according to Claim 1,
wherein the heat-curable coating composition contains a hydroxy-containing acrylic resin and an amino resin.

3. The method of coating adjustment according to Claim 1,
wherein the heat-curable coating composition contains a hydroxy-containing acrylic resin and a polyisocyanate and/or blocked polyisocyanate compound.

4. The method of coating adjustment according to Claim 1,
wherein the heat-curable coating composition contains an acrylic resin capable of forming carboxyl- and epoxy-derived crosslinks.

5. The method of coating adjustment according to Claim 1,
wherein the heat-curable coating composition contains an acrylic resin capable of forming silicone crosslinks.

6. The method of coating adjustment according to any of Claims 1 to 5,
wherein the heat-curable coating composition contains an acrylic resin capable of forming at least two kinds of crosslinks selected from the group consisting of silicone, carboxy/epoxy, urethane and melamine crosslinks.

7. The method of coating adjustment according to any of Claims 1 to 6,
wherein the water content of the top coating is controlled to 2,000 ppm or below.

8. A method of finish-coating
which comprises applying, to a substrate, a heat-curable base coating [I] containing a metallic powder and/or a color pigment,
applying thereon a heat-curable top coating [i] containing 1 to 70 parts by weight (on the solid basis), per 100 parts by weight (on the solid basis) of a heat-curable coating composition (A), of a partial hydrolyzate condensate (B) of an organosilicate compound represented by the general formula (1):
(R¹O)₄₋ₐ-Si-(R²)ₐ (1)
wherein R¹ represents a hydrogen atom or a monovalent hydrocarbon group selected from among an alkyl group containing 1 to 10 carbon atoms, an aryl group containing 3 to 10 carbon atoms and an aralkyl group containing 5 to 10 carbon atoms, R² represents a monovalent hydrocarbon group selected from among an alkyl group containing 1 to 10 carbon atoms, an aryl group containing 3 to 10 carbon atoms and an aralkyl group containing 5 to 10 carbon atoms, and a represents 0 or 1,
subjecting both coating films to simultaneous thermal curing,
further applying a heat-curable base coating [II] containing 0.01 to 30 parts by weight, per 100 parts by weight of the resin solids, of a silane coupling agent,
applying thereon a heat-curable top coating [i],
and then subjecting both coating films to simultaneous thermal curing.

9. The method of finish-coating according to Claim 8,
wherein the silane coupling agent is an aminosilane.

10. The method of finish-coating according to Claim 8,
wherein the silane coupling agent is an epoxysilane.

11. The method of finish-coating according to Claim 8,
wherein the silane coupling agent is a mercaptosilane.

12. The method of finish-coating according to Claim 8,
wherein the silane coupling agent is the reaction product of an aminosilane with an epoxysilane.

13. The method of finish-coating according to Claim 8,
wherein the silane coupling agent is a methacryloxysilane.
